# EUROPÄISCHE PATENTSCHRIFT

(11) **EP 0 656 639 B1**
(45) Veröffentlichungstag und Bekanntmachung des Hinweises auf die Patenterteilung: **04.11.1998**
(21) Anmeldenummer: 93119342.9
(22) Anmeldetag: 01.12.1993
(51) Int. Cl.: H01H 1/60, H01H 9/16

(54) **Digitaleingabe für eine Erfassungsstation**
Digital input for detection station
Entrée numérique pour station de détection

(43) Veröffentlichungstag der Anmeldung: 07.06.1995
(73) Patentinhaber: ASEA BROWN BOVERI AG, 5400 Baden (CH)
(72) Erfinder: Schilling, Robert, CH-5443 Niederrohrdorf (CH)

(56) Entgegenhaltungen:
- EP-A- 0 101 643
- FR-A- 2 666 901
- US-A- 5 258 654
- PATENT ABSTRACTS OF JAPAN vol. 8, no. 155 (E-256) (1592) 19. Juli 1984 & JP-A-59 058 916 (MITSUBISHI) 4. April 1984

## Beschreibung

### TECHNISCHES GEBIET

Bei der Erfindung wird ausgegangen von einer Vorrichtung zur Eingabe eines digitalen Signals nach dem einleitenden Teil von Patentanspruch 1.

### STAND DER TECHNIK

Die Erfindung nimmt dabei auf einen Stand der Technik Bezug, wie er sich beispielsweise aus Indactic 65C Störschreiber Betriebsvorschrift Erfassungsstation HEDT 92730, 9105 der Fa. ABB Process Automation AG, Baden/Schweiz, 2. Auflage 1991, ergibt. Der in diesem Stand der Technik beschriebenen Erfassungsstation werden aus einem entfernt ablaufenden Prozess, beispielsweise der Verteilung elektrischer Energie in einem elektrischen Verteilnetz, unter anderem auch digitale Signale zugeführt. Solche digitalen Signale werden im Prozess von Geberelementen erzeugt, welche beispielsweise bei einem elektrischen Verteilnetz als Hilfskontakte der im Verteilnetz vorgesehenen Schaltgeräten ausgeoildet sind. Die digitalen Signale liefern beim Verteilnetz die Information darüber, ob die den Signalen zugeordneten Schaltgeräte ein- oder ausgeschaltet sind. Jeder als Geberelement fungierende Hilfskontakt ist mit zwei Stromanschlüssen einer Vorrichtung zur Eingabe digitaler Daten der Erfassungsstation verbunden. Diese Eingabevorrichtung weist mit den beiden sowie zwei weiteren Stromanschlüssen verbundene Leiterabschnitte sowie einen Optokoppler auf.

Eine ausserhalb der Eingabevorrichtung in einer Anlage, in der der Prozess abläuft, vorgesehene Batterie von typischerweise 110 oder 220 V Gleichspannung, ist mit den beiden weiteren Stromanschlüssen der Eingabevorrichtung verbunden. Die Batterie, der Hilfskontakt und der Optokoppler sind Bestandteil eines Stromkreises. Beim Auftreten eines besonderen Ereignisses während des Prozesses wird der Hilfskontakt unter Bildung des digitalen Signals geschlossen. Das digitale Signal ist ein Gleichstrom, der in dem von der Batterie gespeisten Stromkreis fliesst. Der Gleichstrom wird durch den Optokoppler in einen galvanisch vom Batteriestromkreis getrennten Signalverarbeitungsstromkreis abgebildet. Zur Vermeidung unerwünschter elektrischer und elektromagnetische Störpegel in der Eingabevorrichtung ist es erforderlich, an allen vier Stromanschlüssen Filter vorzusehen, welche diese Störpegel von der Eingabevorrichtung fernhalten. Da das als Hilfskontakt ausgebildete Geberelement mit der vollen Batteriespannung beaufschlagt ist, müssen nicht nur an den mit der Batterie, sondern auch an den mit dem Geberelement verbundenen Stromanschlüssen EMV-Filter angeordnet werden, welche eine für Stromversorgungen ausreichende Dimensionierung aufweisen.

In EP-A3-0 101 643 ist eine Konstantstromquelle für Feldkontakteingänge beschrieben. Diese Konstantstromquelle weist ein von einer veränderbaren Gleichspannung gespeistes Netzwerk auf, welches beim Schliessen eines Feldkontaktes einen zum Reinigen des Feldkontaktes erwünschten konstanten Strom bei einem vorgegebenen konstanten Gleichspannung liefert. Feldkontakt, Konstantstromquelle und eine die Gleichspannung liefernde externe Speisespannungsquelle bilden einen Signalstromkreis, welcher von der Speisespannungsquelle und dem Feldkontakt eingespeisten Störpegeln ausgesetzt ist.

FR-A1-2 666 901 ist eine Vorrichtung zum Erfassen und zum zeitlichen Aufzeichnen von Störungen in einem elektrischen Netz zu entnehmen. Die Störungen werden von einem Relaiskontakt einem batteriegespeisten Rechner gemeldet. Zwischen Rechner und Relaiskontakt ist eine einen Gleichstromumwandler aufweisende Anpassungsschaltung angeordnet. In dieser Anpassungsschaltung wird der Pegel einer vom Rechner gelieferten logischen Spannung von beispielsweise 3,4 V auf den Wert einer am geöffnetem Relaiskontakt abfallenden Spannung von beispielsweise 10 V angehoben.

JP-A-59 058 916 beschreibt eine einen Kontakt, einen Optokoppler sowie Dioden, Widerstände und Kapazitäten enthaltende Schaltungsanordnung. Beim Schliessen des Kontakts wird vom Optokoppler ein vom Kontakt galvanisch entkoppeltes digitales Signal ausgegeben. Unerwünschte Kontaktoxidation wird durch einen Stromstoss vermieden, der beim Schliessen des Kontakts von einem auf hohe Spannungen aufgeladenen Kondensator erzeugt wird.

### KURZE DARSTELLUNG DER ERFINDUNG

Der Erfindung, wie sie in Patentanspruch 1 angegeben ist, liegt die Aufgabe zugrunde, eine Vorrichtung zur Eingabe eines digitalen Signals der eingangs genannten Art zu schaffen, welche bei einfachem Aufbau in kostengünstiger Weise elektrisch und elektromagnetisch abgeschirmt werden kann.

Die Eingabevorrichtung nach der Erfindung zeichnet sich gegenüber vergleichbaren Eingabevorrichtungen nach dem Stand der Technik dadurch aus, dass sie lediglich an den Stromanschlüssen der externen Spannungsquelle vergleichsweise aufwendige Schutzvorrichtungen benötigt, durch die unerwünschte elektrische und elektromagnetische Störpegel von ihr ferngehalten werden. An den Stromanschlüssen für das Geberelement liegt hingegen keine Speise-, sondern nurmehr eine Signalspannung an. Signal- und Steuerleitungen lassen sich gegenüber Speisespannungsleitungen wesentlich kostengünstiger vor elektrischen und elektromagnetischen Störpegeln schützen. Daher sind an diesen Stromanschlüssen lediglich kostengünstig durchzuführende EMV-Schutzmassnahmen erforderlich.

Werden in der Eingabevorrichtung nach der Erfindung eine konstante Signalspannung und eine der eingangsseitigen Gleichspannung proportionale Spannung erzeugt, so reicht auch bei sehr verschiedenen externen Spannungsquellen ein einziger Typ von Eingabevorrichtungen aus, um beim Eintreten des besonderen Ereignisses stets mit Sicherheit ein digitales Signal zu generieren. Dies ist dadurch bedingt, dass durch die zunächst wirkende eingangsproportionale Spannung das Geberelement aktiviert und somit das digitale Signal gebildet wird. Das gebildete digitale Signal kann danach mit der vergleichsweise geringen konstanten Signalspannung beibehalten werden. Daher sind die elektrischen Verluste bei der Eingabevorrichtung nach der Erfindung äusserst klein und entfällen zudem bei der Erstellung neuer Erfassungsstationen die bisher dabei notwendigen Projektierungsarbeiten.

### KURZE BESCHREIBUNG DER ZEICHNUNGEN

Ein bevorzugtes Ausführungsbeispiel der Erfindung und die damit erzielbaren weiteren Vorteile werden nachfolgend anhand von Zeichnungen näher erläutert. Hierbei zeigt:
- Fig.1: ein Blockschaltbild einer Erfassungsstation, in der eine Vorrichtung zur Eingabe eines digitalen Signals nach der Erfindung vorgesehen ist,
- Fig.2: ein Schaltbild der aus Fig.1 ersichtlichen Eingabevorrichtung, und
- Fig.3: ein Diagramm, in dem der Strom I eines von der Eingabevorrichtung gemäss Fig.2 erfassten digitalen Signals in Abhängigkeit von der Zeit t dargestellt ist.

### WEGE ZUR AUSFÜHRUNG DER ERFINDUNG

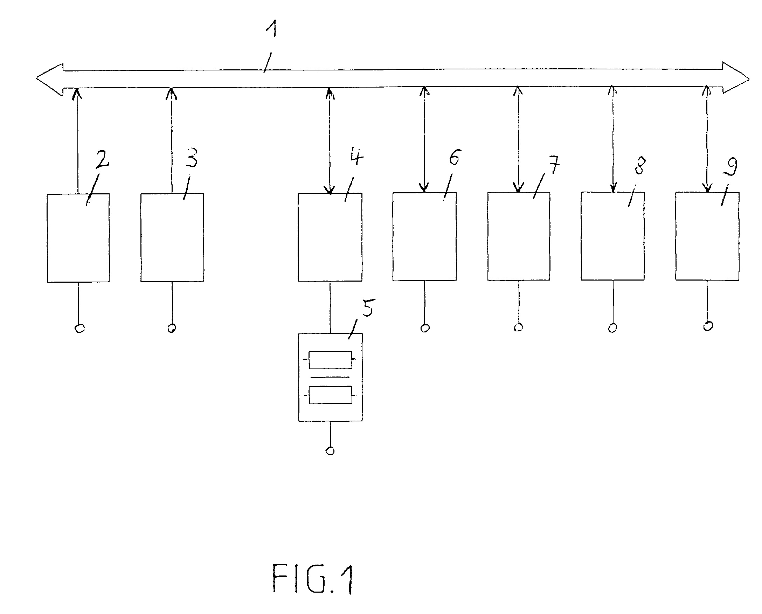

Die in Fig.1 dargestellte Erfassungsstation ist aus Modulen aufgebaut, die über einen Systembus 1 kommunizieren. Eines der Module dient als Speisegerät 2. Dieses Speisegerät übernimmt die galvanische Trennung von einer speisenden Quelle und erzeugt die von der Erfassungsstation benötigten Spannungen. Ein weiteres Modul dient als Vorrichtung 3 zur Eingabe digitaler Daten. Diese Eingabevorrichtung kann parallel mit beispielsweise 16 digitalen Prozessignalen beaufschlagt werden. Solche Prozessignale sind beispielsweise die von Hilfskontakten der Schaltgeräten einer Hochspannungsschaltanlage eines elektrischen Energieverteilnetzes erfassten Schaltstellungen der Schaltgeräte. Diese Signale werden fortlaufend von der Eingabevorrichtung 3 geprüft und gegebenenfalls gespeichert.

Einem als Analogeingabe 4 wirkenden Modul werden von vorzugsweise als Strom- oder Spannungswandler 5 ausgebildeten Analogsignalgebern analoge Signale aus dem Prozess zugeführt. Weitere Module sind als Mikrorechner 6, Bedienungseinheit 7, serielle Schnittstelle 8 und Modem 9 ausgebildet und dienen der Reihe nach der Steuerung des Datenverkehrs auf dem Systembus 1, der Handbedienung der Erfassungsstation, der Verbindung zu einem Störschreiber und der Kommunikation auf einer externen Übertragungsleitung.

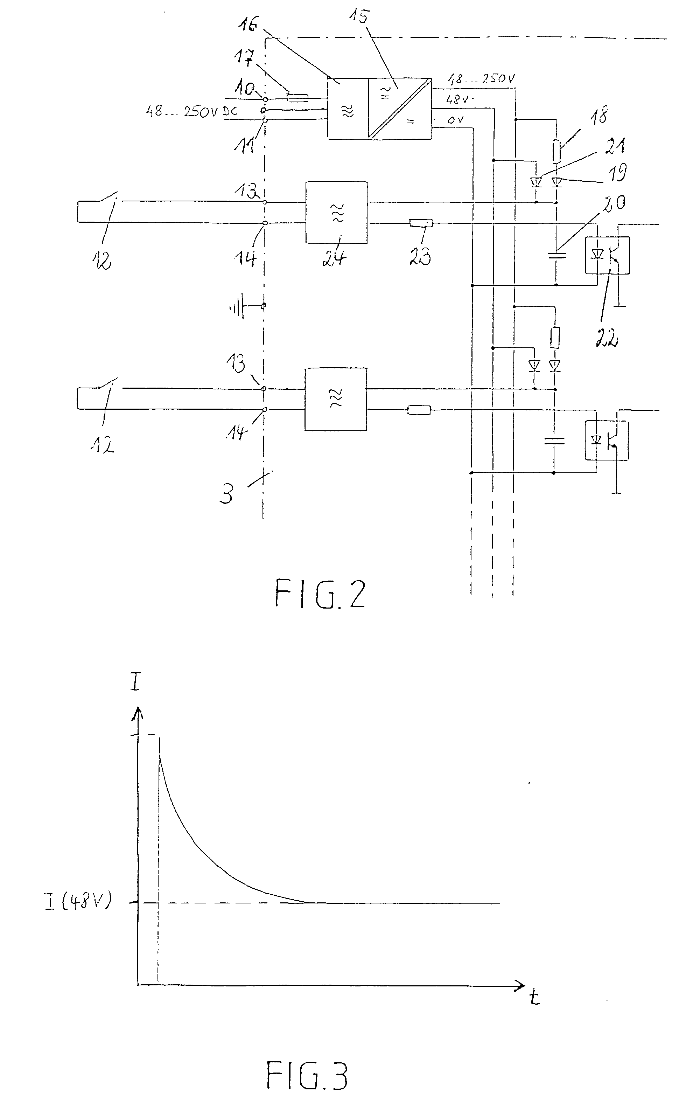

Der Aufbau der Digitaleingabe 3 ist in Fig.2 dargestellt. Aus dieser Figur ist ersichtlich, dass die Digitaleingabe 3 ein auf Erd- oder Massepotential geführtes Gehäuse mit zwei als Klemmen ausgebildeten Stromanschlüsse 10 und 11 aufweist. An die beiden Stromanschlüsse 10, 11 ist eine externe Spannungsquelle angeschlossen. Diese Spannungsquelle ist im allgemeinen eine Batterie mit einer Gleichspannung zwischen 48 und 250 V. Diese Batterie befindet sich in einer Anlage, beispielsweise in einer Schaltanlage eines Energieverteilungsnetzes oder in einer Fertigungsanlage eines Industriebetriebes, in der ein Prozess stattfindet, der auf das Eintreten besonderer Ereignisse überwacht werden soll. In der Anlage befinden sich ferner Geberelemente 12, welche vorzugsweise als Hilfskontakte eines Schaltgerätes ausgebildet sind. Diese Geberelemente 12 sind jeweils mit zwei Stromanschlüssen 13, 14 der Digitaleingabe 3 verbunden. Die Spannung der in der Anlage vorgesehenen Batterie ist so bemessen, dass beim Schliessen der Hilfskontakte 12 infolge des Eintretens eines besonderen Ereignisses durch Oxidation oder Verunreinigungen gebildete Oberflächenwiderstände entfernt und eine sichere Kontaktgabe gewährleistet ist. In Abhängigkeit von der Ausbildung des Systembuses 1 können beispielsweise bis zu 8 oder 16 Geberelemente pro Digitaleingabe 3 vorgesehen sein.

In der Digitaleingabe 3 ist eine als DC-DC-Konverter bzw. als Gleichstromumwandler 15 ausgebildete Vorrichtung zum Umwandeln des von der Batterie zugeführten Gleichstroms in von diesem galvanisch getrennten Gleichstrom vorgesehen. Ein erster Eingang dieser Vorrichtung ist über ein Filter 16 und eine Schmelzsicherung 17 mit dem Stromanschluss 10, ein zweiter Eingang ist hingegen lediglich über das Filter 16 mit dem Stromanschluss 11 verbunden. Das Filter 16 dient der elektromagnetischen Verträglichkeit der Digitaleingabe 3 und filtert über die externe Gleichspannungsversorgung an die Digitaleingabe 3 geführte elektrische und elektromagnetische Störpegel aus. Das Filter 16 ist mit Masse verbunden, um die bei der Spannungsversorgung ausgefilterten - vergleichsweise grossen - Störströme von der Digitaleingabe nach Erde abzuleiten. Die Schmelzsicherung dient dem Schutz des Gleichstromumwandlers vor Überlast.

Der Gleichstromumwandler 15 weist drei Ausgänge auf. Ein erster dieser drei Ausgänge führt eine der eingangsseitigen Batteriespannung proportionale Gleichspannung von typischerweise 48 bis 250 V. Ein zweiter der drei Ausgänge führt eine Gleichspannung mit konstanter Amplitude von typischerweise 48 V, wohingegen der dritte Ausgang auf Nullpotential (Bezugs- oder Rückleiter) gehalten ist. Der erste Ausgang des Gleichstromumwandlers 15 ist über eine Reihenschaltung eines hochohmigen Widerstandes 18 und einer Diode 19 mit einem ersten Stromanschluss eines Kondensators 20 verbunden. Der zweite Ausgang des Gleichstromumwandlers 15 ist über eine Diode 21 ebenfalls mit dem ersten Stromanschluss des Kondensators 20 verbunden. Der dritte Ausgang des Gleichstromumwandlers 15 ist hingegen an den zweiten Stromanschluss des Kondensators sowie an einen ersten Stromanschluss einer in einem Optokoppler 22 vorgesehenen Leuchtdiode geführt.

Der zweite Stromanschluss der Leuchtdiode des Optokopplers 22 ist über einen ohmschen Widerstand 23 und ein Filter 24 mit dem Stromanschluss 14 verbunden. Hingegen ist der erste Stromanschluss des Kondensators 20 über das Filter 24 mit dem Stromanschluss 13 verbunden. Das Filter 24 dient der elektromagnetischen Verträglichkeit der Digitaleingabe 3 und filtert über das Geberelement 12 an die Digitaleingabe 3 geführte elektrische und elektromagnetische Störpegel aus. Da in einer Signalleitung lediglich geringe elektrische und elektromagnetische Störpegel auszufiltern sind, kann das Filter 24 gegenüber dem Filter 16 sowie gegenüber Filtern bei Digitaleingaben nach dem Stand der Technik, bei denen in den Signalleitungen auch Speisespannung geführt wird, äusserst kostengünstig ausgeführt werden. Eine elektrische Verbindung zu Masse entfällt, da die ausgefilterten Störströme gegenüber den ausgefilterten Störströmen bei der Gleichspannungsversorgung der Digitaleingabe 3 sehr gering sind.

Die drei Ausgänge des Gleichstromumwandlers 15 wirken in entsprechender Weise auf in der Fig.2 nicht bezeichnete Kondensatoren und Optokoppler von Signalstromkreisen, welche anderen Geberelementen 12 zugeordnet sind.

Die Digitaleingabe 3 nach der Erfindung wirkt wie folgt: Bei normalem Ablauf des Prozesses ist das Geberelement 12 passiv, d.h. der dem Geberelement zugeordnete Hilfskontakt ist entsprechend Fig. 2 geöffnet. Über den hochohmigen Widerstand 18 und die Diode 19 ist der Kondensator 20 auf eine der Batteriespannung entsprechende Spannung aufgeladen. Die Ladespannung des Kondensators 20 erscheint an den Stromanschlüssen 13, 14.

Bei Eintritt des besonderen Ereignisses, beispielsweise bei Betätigung eines in einer Schaltanlage vorgesehenen Schaltgerätes, wird der Hilfskontakt geschlossen. Entsprechend dem in Fig.3 angegebenen Diagramm entlädt sich nun der Kondensator 20 über den Hilfskontakt 12, den Widerstand 23 und die Leuchtdiode des Optokopplers 22 zunächst mit einem impulsartigen Einschaltstromstoss, dessen Anfangsspannung anfänglich durch die Grösse der eingangsspannungsproportionalen Gleichspannung bestimmt ist. Dieser Stromstoss entfernt am Hilfskontakt möglicherweise vorhandene Oxid- und Schmutz schichten und ermöglicht so eine sichere Kontaktgabe bei niedrigeren Spannungswerten. Der Kondensator 20 ist so bemessen, dass dieser Stromstoss ausreicht, um die vorstehend beschriebene Wirkung zu erreichen. Nachfolgend geht der nun ausschliesslich vom zweiten Ausgang des Gleichstromumwandlers 15 gelieferte Signalstrom in einen Gleichstrom von 48 V über. Dieser Gleichstrom bildet ein digitales Signal, welches über den Optokoppler 22 galvanisch entkoppelt in einen auf den Systembus 1 wirkenden Stromkreis abgebildet wird.

### BEZUGSZEICHENLISTE

- 1: Systembus
- 2: Speisegerät
- 3: Digitaleingabe
- 4: Analogeingabe
- 5: Strom- oder Spannungswandler
- 6: Mikrorechner
- 7: Bedienungseinheit
- 8: serielle Schnittstelle
- 9: Modem
- 10, 11: Stromanschlüsse
- 12: Geberelemente
- 13, 14: Stromanschlüsse
- 15: Gleichstromumwandler
- 16: Filter
- 17: Schmelzsicherung
- 18: Widerstand
- 19: Diode
- 20: Kondensator
- 21: Diode
- 22: Optokoppler
- 23: Widerstand
- 24: Filter

## Patentansprüche

1. Vorrichtung zur Eingabe eines digitalen Signals für eine Station zum Erfassen des digitalen Signals beim Eintreten eines besonderen Ereignisses in einem Prozess, insbesondere bei einer Störung beim Betreiben eines Verteilnetzes für elektrische Energie,
- mit mindestens vier Stromanschlüssen (10, 11, 13, 14), von denen zwei erste (10, 11) von einer externen Spannungsquelle mit Gleichstrom beaufschlagt und zwei zweite (13, 14) mit einem Geberelement (12), insbesondere des Verteilnetzes, verbunden sind, das beim Eintritt des besonderen Ereignisses das digitale Signal abgibt, und
- mit einem mit den beiden zweiten Stromanschlüssen (13, 14) verbundenen und das digitale Signal an eine galvanische Trennstelle (22) führenden Signalstromkreis,
dadurch gekennzeichnet,
- dass ein Gleichstromumwandler (15) zum Umwandeln des zugeführten Gleichstroms in einen von diesem galvanisch getrennten Gleichstrom vorgesehen ist, welche eingangsseitig mit den beiden ersten Stromanschlüssen (10, 11) und ausgangsseitig mit dem Signalstromkreis verbunden ist,
- dass der Gleichstromumwandler (15) drei Ausgänge aufweist, von denen ein erster eine der eingangsseitigen proportionale Gleichspannung abgibt, ein zweiter eine Gleichspannung mit konstanter Amplitude abgibt und ein dritter auf Nullpotential gehalten ist, und dass im Signalstromkreis:
- der erste Ausgang über eine Reihenschaltung eines hochohmigen Widerstands (18) und einer Diode (19) und der zweite Ausgang über eine Diode (21), beide mit einem ersten Stromanschluss eines Kondensators (20) und mit einem ersten (13) der beiden zweiten Stromanschlüsse (13, 14) verbunden sind,
- der dritte Ausgang mit einem zweiten Stromanschluss des Kondensators (20) und mit einem ersten Stromanschluss der galvanischen Trennstelle (22) verbunden ist, und
- ein ohmscher Widerstand (23) zwischen einem zweiten (14) der beiden zweiten Stromanschlüsse (13, 14) und einem zweiten Stromanschluss der galvanischen Trennstelle (22) angeordnet ist.

2. Vorrichtung nach Anspruch 1, dadurch gekennzeichnet, dass die beiden ersten Stromanschlüssen (10, 11) über ein Filter (16) mit dem Gleichstromumwandler (15) verbunden ist, welches an die Auskoppelung der in die Gleichstromversorgung eingekoppelten elektrischen und elektromagnetischen Störpegel angepasst ist.

3. Vorrichtung nach Anspruch 2, dadurch gekennzeichnet, dass einer (10) der beiden ersten Stromanschlüsse (10, 11) über eine Schmelzsicherung (17) mit dem Filter (16) verbunden ist.

4. Vorrichtung nach einem der Ansprüche 2 oder 3, dadurch gekennzeichnet, dass im Signalstromkreis ein mit den beiden zweiten Stromanschlüssen (13, 14) verbundenes Filter (24) angeordnet ist, welches an die Auskoppelung der über das Geberelement (12) in die Signalstromleitung einkoppelten elektrischen und elektromagnetischen Störpegel angepasst ist.

## Claims

1. Device for inputting a digital signal for a station for recording the digital signal when a special event occurs in a process, in particular in the event of interference in the operation of a distribution network for electrical energy,
- having at least four current terminals (10, 11, 13, 14), to the first two (10, 11) of which direct current is applied from an external voltage source, and the second two (13, 14) of which are connected to a sensor element (12), in particular of the distribution network, which outputs the digital signal when the special event occurs, and
- having a signal circuit which is connected to the two second current terminals (13, 14) and carries the digital signal to an electrical isolating point 22,
characterized
- in that a direct current converter (15) is provided for converting the direct current supplied into a direct current which is electrically isolated therefrom, which device is connected to the two first current terminals (10, 11) on the input side and to the signal circuit on the output side,
- in that the direct current converter (15) has three outputs, a first one of which outputs an input-side proportional direct current voltage, a second one of which outputs a direct current voltage having a constant amplitude and a third one of which is held at zero potential, and in that in the signal circuit:
- both the first output and the second output are connected to a first current terminal of a capacitor (20) and to a first (13) of the two second current terminals (13, 14), the first output being connected via a series circuit formed by a high-value resistor (18) and a diode (19) and the second output being connected via a diode (21),
- the third output is connected to a second current terminal of the capacitor (20) and to a first current terminal of the electrical isolating point (22), and
- a non-reactive resistor (23) is arranged between a second (14) of the two second current terminals (13, 14) and a second current terminal of the electrical isolating point (22).

2. Device according to Claim 1, characterized in that the two first current terminals (10, 11) is [sic] connected to the direct current converter (15) via a filter (16), which filter is adapted to coupling out the electrical and electromagnetic noise levels coupled into the direct current supply.

3. Device according to Claim 2, characterized in that one (10) of the two first current terminals (10, 11) is connected to the filter (16) via a fusible link (17).

4. Device according to one of Claims 2 or 3, characterized in that a filter (24) which is connected to the two second current terminals (13, 14) is arranged in the signal circuit, which filter is adapted to coupling out the electrical and electromagnetic noise levels coupled into the signal current line via the sensor element (12).

## Revendications

1. Dispositif pour l'entrée d'un signal numérique pour une station en vue de l'enregistrement du signal numérique lorsque survient un événement particulier dans un processus, en particulier lors d'une perturbation pendant l'exploitation d'un réseau de distribution pour l'énergie électrique,
- avec au moins quatre raccordements électriques (10, 11, 13, 14) dont on injecte dans les deux premiers (10, 11) un courant continu d'une source de tension externe et dont les deux seconds (13, 14) sont reliés à un élément capteur (12), en particulier du réseau de distribution, qui délivre le signal numérique lorsque survient l'événement particulier, et
- avec un circuit électrique de signal qui est relié aux deux seconds raccordements électriques (13, 14) et qui achemine le signal numérique à une interface d'isolation galvanique (22),
caractérisé
- en ce qu'un convertisseur à courant continu (15) est prévu pour convertir le courant continu qui lui est amené en un courant continu galvaniquement isolé de celui-ci qui est relié du côté de l'entrée aux deux premiers raccordements électriques (10, 11) et du côté de la sortie au circuit électrique du signal,
- en ce que le convertisseur à courant continu (15) présente trois sorties dont une première délivre une tension continue proportionnelle au côté de l'entrée, une deuxième délivre une tension continue d'amplitude constante et une troisième est maintenue au potentiel nul, et en ce que dans le circuit électrique du signal :
- la première sortie est reliée à travers un branchement en série d'une résistance de valeur ohmique élevée (18) et d'une diode (19), et la deuxième sortie est reliée à travers une diode (21), les deux étant raccordées à un premier raccordement électrique d'un condensateur (20) et à un premier (13) des deux seconds raccordements électriques (13, 14),
- la troisième sortie est reliée à un second raccordement électrique du condensateur (20) et à un premier raccordement électrique de l'interface d'isolation galvanique (22), et
- une résistance ohmique (23) est disposée entre un second (14) des deux seconds raccordements électriques (13, 14) et un second raccordement électrique de l'interface d'isolation galvanique (22).

2. Dispositif selon la revendication 1, caractérisé en ce que les deux premiers raccordements électriques (10, 11) sont reliés à travers un filtre (16) à un convertisseur à courant continu (15), qui est adapté au découplage du niveau de perturbation électrique et électromagnétique couplé à l'alimentation à courant continu.

3. Dispositif selon la revendication 2, caractérisé en ce qu'un (10) des deux premiers raccordements électriques (10, 11) est relié à travers un fusible (17) au filtre (16).

4. Dispositif selon l'une des revendications 2 ou 3, caractérisé en ce qu'un filtre (24), relié aux deux seconds raccordements électriques (13, 14), est disposé dans le circuit électrique du signal, ce filtre étant adapté au découplage du niveau de perturbation électrique et électromagnétique couplé à travers le capteur (12) à la ligne électrique du signal.
